# FASCICULE DE BREVET EUROPEEN

(11) **EP 3 465 476 B1**
(45) Date de publication et mention de la délivrance du brevet: **28.06.2023**
(21) Numéro de dépôt: 17729526.8
(22) Date de dépôt: 22.05.2017
(51) Int. Cl.: G06F 16/954

(54) **PROCÉDÉ D'INVOCATION D'UN SERVICE APPLICATIF PAR UN NAVIGATEUR**
VERFAHREN ZUM AUFRUFEN EINES ANWENDUNGSDIENSTES ÜBER EINEN BROWSER
METHOD FOR INVOKING AN APPLICATION SERVICE VIA A BROWSER

(30) Priorité: 31.05.2016 FR 1654903
(43) Date de publication de la demande: 10.04.2019
(73) Titulaire: Orange, 92130 Issy-les-Moulineaux (FR)
(72) Inventeur: ZIMMERMANN, Julien, 14460 Colombelles (FR); CAZEAUX, Stéphane, 14280 Authie (FR)
(86) Numéro de dépôt international: PCT/FR2017/051257
(87) Numéro de publication internationale: WO 2017/207892

(56) Documents cités:
- EP-A1- 2 246 793
- CN-A- 104 580 639
- US-A1- 2005 097 189
- US-A1- 2017 346 952
- Michael Jasper: "Convert <address> tag to Google Maps embed automatically with jQuery : Mike Does Web", http://www.mikedoesweb.com, 4 octobre 2012 (2012-10-04), XP055341066, Extrait de l'Internet: URL:http://www.mikedoesweb.com/2012/conver t-tag-to-google-maps-embed-automatically-w ith-jquery/ [extrait le 2017-02-01]

## Description

### Arrière-plan de l'invention

La présente invention se situe dans le domaine général des logiciels de navigation ou navigateurs, et trouve une application privilégiée mais non limitative dans le domaine des navigateurs Web (« Web Browsers » en anglais).

Elle concerne plus particulièrement l'utilisation de services applicatifs dans un navigateur.

Ces services applicatifs sont également appelés services en ligne.

Les navigateurs permettent actuellement à leurs utilisateurs d'accéder à des services applicatifs fournis par des tiers, par exemple des entreprises.

Les fonctions principales de ces tiers ou ces entreprises sont l'hébergement, la gestion et la maintenance de logiciels, par exemple au sein de serveurs, ces logiciels permettant de fournir à des terminaux d'utilisateurs les services en question.

Ces services applicatifs peuvent être accessibles dans des pages de navigateurs, ces derniers étant installés sur ces terminaux. L'accès à de tels services peut nécessiter un abonnement et/ou une identification des utilisateurs.

Ces services peuvent par exemple consister en des services disponibles sur Internet, des services de mise en relation, par exemple téléphonique ou visiophonique, des services de traduction de contenu, des services de messagerie, des services d'analyse antivirale, etc.

Actuellement, l'accès aux services en ligne dans un navigateur présente certaines difficultés. En effet, il n'existe à ce jour pas de technique permettant d'accéder de manière simple, rapide et efficace à un ou plusieurs services applicatifs ou services en ligne à partir d'une page quelconque d'un navigateur.

Le document US 2005/097189 A1 décrit un procédé permettant de déclencher à partir d'un navigateur, l'exécution d'une action sur un terminal.

La présente invention propose d'améliorer l'accès à un service dans un navigateur.

### Objet et résumé de l'invention

A cet effet, la présente invention propose un mécanisme permettant, à partir d'un type de donnée présent dans une page quelconque d'un navigateur, par exemple un numéro de téléphone (contact, SAV, annuaire, etc.), d'invoquer un service applicatif ou service en ligne prenant en entrée ce type de donnée, par exemple un service de téléphonie.

Plus spécifiquement et selon un premier aspect, l'invention concerne un procédé d'invocation dans un terminal d'un service applicatif par un navigateur tel que défini par la revendication 1, ce procédé comportant :
- une étape de détection, dans une première page chargée dans le navigateur, d'une donnée d'invocation conforme à un type de donnée d'invocation enregistré pour le service applicatif ; et
- une étape d'invocation, dans cette première page chargée, de ce service à partir de cette donnée d'invocation détectée.

Le procédé comporte, préalablement à l'étape de détection d'un donnée d'invocation, une étape de réception d'une première instruction définissant une deuxième page fournissant le service, cette première instruction définissant le type de donnée d'invocation associé à ce service.

Cette première instruction permet à la fois de proposer le service à l'utilisateur dans une page du navigateur, mais également de définir le type de donnée d'invocation utilisable par ce service.

Cette première instruction peut être comprise dans l'ensemble des données de page associé à cette deuxième page fournissant le service et tel que décrit précédemment.

Avantageusement, cette première instruction peut être envoyée simultanément à ces données de page.

Elle peut donc éventuellement faire l'objet d'une « normalisation » auprès des fournisseurs de services, ces derniers ayant simplement à ajouter cette première instruction ainsi « normalisée » à l'ensemble de données de page envoyé au terminal pour permettre à n'importe quel navigateur mettant en oeuvre l'invention d'enregistrer les types de donnée d'invocation utilisables par ces services.

Ce type de donnée d'invocation est enregistré dans une table du terminal.

La première instruction définit une adresse réseau pointant vers une troisième page, l'étape d'invocation comporte une étape de déclenchement du chargement de cette troisième page à partir de cette adresse, et le procédé comporte une étape d'exécution du service dans cette troisième page.

De manière avantageuse, le service applicatif est invoqué au sein de la deuxième page, mais le service s'exécute dans une troisième page dont le chargement est déclenché au moment de l'invocation.

La manière de définir cette adresse réseau peut faire l'objet d'une « normalisation » auprès des fournisseurs de services.

N'importe quel fournisseur d'un service peut simplement ajouter une instruction « normalisée » permettant de définir cette adresse réseau à l'ensemble de données de page associée à la deuxième page fournissant le service pour permettre à n'importe quel navigateur mettant en oeuvre l'invention d'invoquer ce service dans cette troisième page différente de la deuxième page.

Dans le procédé :
- la première instruction définit une fonction d'invocation du service ;
- l'étape d'invocation comporte une étape d'invocation de cette fonction ; et
- l'étape d'exécution du service dans la troisième page comporte l'exécution de cette fonction.

L'exécution de cette fonction cause l'affichage, dans la première page chargée, d'une unité de commande accessible par un utilisateur pour contrôler le service invoqué lors de son exécution dans la troisième page.

Avantageusement, l'utilisateur peut contrôler le service dans la première page sans avoir à accéder à la troisième page exécutant le service.

Corrélativement, l'invention concerne un terminal permettant l'invocation d'un service applicatif par un navigateur tel que défini par la revendication 11, ce terminal comportant :
- un module de détection, dans une première page chargée dans le navigateur, d'une donnée d'invocation conforme au type de donnée d'invocation enregistré pour le service applicatif, par exemple en association avec un identifiant du service ; et
- un module d'invocation, dans la première page chargée, de ce service à partir de cette donnée d'invocation détectée.

Le terminal comporte des moyens de réception permettant, préalablement à la détection, la réception d'une première instruction définissant au moins une deuxième page fournissant ledit au moins un service, ladite première instruction définissant ledit au moins un type de donnée d'invocation, une adresse réseau pointant vers au moins une troisième page et une fonction d'invocation dudit au moins un service; ladite invocation dudit au moins un service comportant :
∘ une étape de déclenchement du chargement de ladite au moins une troisième page à partir de ladite au moins une adresse; et
∘ une étape d'invocation de ladite fonction ;

Le terminal est configuré pour exécuter ledit au moins un service dans ladite au moins une troisième page, ladite exécution comportant l'exécution de ladite fonction causant l'affichage, dans ladite première page chargée, d'une unité de commande accessible par un utilisateur pour contrôler ledit au moins un service lors de son exécution dans ladite troisième page.

Un navigateur est un logiciel mis en oeuvre dans un terminal et permettant de consulter et d'afficher un contenu provenant d'un réseau auquel est connecté ce terminal.

Dans le cas particulier d'un navigateur Web et d'un terminal relié à Internet, ce contenu est un contenu Internet.

A titre d'alternative, le terminal est relié à un réseau Intranet ou un réseau privé.

Le navigateur charge et éventuellement affiche sur une interface du terminal une ou plusieurs pages, chacune de ces pages comportant, au sens de l'invention, un ensemble de données de page, ces données étant fournies par le réseau.

Dans un mode de réalisation particulier, ces données de page comporte :
- une description HTML (« HyperText Markup Language ») permettant de structurer et mettre en forme les pages lors de leurs chargements dans le navigateur ;
- des fonctions en langage de programmation « Javascript » pouvant être appelées dans la description HTML ; et
- d'autres données, par exemple des données multimédias, pouvant être également appelées dans la description HTML, par exemple des images à afficher.

Une page est dite chargée lorsque le navigateur finit d'interpréter la description HTML qui lui est associée.

Une page d'un navigateur peut proposer un service applicatif ou service en ligne, en d'autres mots un service accessible via le réseau auquel est connecté le terminal.

En d'autres termes, au sens de l'invention, un service applicatif est un service fourni directement par une page du navigateur et ne nécessitant donc aucune installation logicielle spécifique.

Un service applicatif peut comporter différentes fonctions. Par exemple, un service de téléphonie peut proposer une fonction d'appel, mais également d'autres fonctions, comme par exemple la gestion d'une liste de contacts ou d'un agenda.

Un service applicatif est caractérisé par le ou les types de données qu'il est capable de traiter ou d'utiliser, c'est à dire par les données qu'il peut prendre en entrée.

Au sens de l'invention, les données d'entrée du service sont appelées données d'invocation puisqu'elles peuvent être utilisées pour invoquer ce service. On parle alors également de types de données d'invocation.

L'invocation d'un service applicatif correspond au moment où le service est rendu utilisable pour un utilisateur. Par exemple, l'invocation du service peut correspondre à l'instant où l'utilisateur commence à utiliser l'une de ses fonctions.

L'invocation du service correspond donc au déclenchement de son exécution.

Ainsi, l'invention permet avantageusement d'invoquer, dans une page quelconque du navigateur, un service applicatif à partir d'une donnée d'invocation présente dans cette page et dont le type est conforme au type de donnée que ce service applicatif peut utiliser.

En particulier, l'invention ne nécessite pas une installation d'un logiciel fournissant ce service, mais simplement de connaître le type de donnée utilisable par le service applicatif ou service en ligne et de détecter ce type de donnée dans une page chargée du navigateur.

Dans un mode particulier de réalisation, ce procédé comporte, préalablement à l'étape de détection d'une donnée d'invocation, une étape d'enregistrement du type de donnée d'invocation pour le service invoqué.

Dans un mode particulier de réalisation, l'étape de détection comporte :
- une étape d'identification de données d'invocation présentes dans la première page chargée ; et
- une étape de détermination pour déterminer, pour une donnée d'invocation identifiée, si cette donnée est conforme au type de donnée d'invocation enregistrée.

Dans un mode particulier de réalisation, lors de l'étape d'identification, la donnée d'invocation est identifiée en réponse à une commande d'un utilisateur reçue par le navigateur.

Ainsi, cette donnée d'invocation est par exemple sélectionnée par l'utilisateur avant qu'il soit déterminé si cette donnée est conforme au type de donnée d'invocation associé au service applicatif.

Dans un mode particulier de réalisation, l'étape de détection comporte l'une parmi :
- une étape d'analyse sémantique de la première page chargée ; et
- une étape de détection d'un marqueur codé dans cette première page en association avec les données d'invocation.

Dans un mode particulier de réalisation, lors de l'étape de détection, la deuxième page proposant le service n'est pas chargée dans le navigateur.

Avantageusement, un utilisateur peut invoquer le service applicatif sans avoir à charger juste avant la page proposant ce service.

Dans un mode particulier de réalisation, l'étape d'invocation est effectuée :
- automatiquement, en réponse à l'étape de détection d'une donnée d'invocation dans la première page chargée ; ou
- en réponse à une commande d'un utilisateur.

Dans un mode particulier de réalisation, le procédé comporte une étape de déclenchement de la fourniture d'une notification indiquant l'accessibilité, dans la première page, du service applicatif.

L'utilisateur est alors notifié de l'accessibilité du service.

Dans un mode particulier de réalisation, lors de l'étape de déclenchement, le navigateur fournit la notification.

Dans un mode particulier de réalisation, lors de l'étape de déclenchement, le navigateur affiche la notification dans la première page chargée.

Dans un mode particulier de réalisation, l'étape de déclenchement comporte une étape d'envoi d'une commande, vers un dispositif, causant la fourniture de cette notification par ce dispositif.

Dans un mode particulier de réalisation, ce dispositif peut consister en un quelconque parmi :
- le terminal mettant en oeuvre le procédé ; et
- un dispositif externe à ce terminal.

Par conséquent, la fourniture de cette notification peut être effectuée soit par le navigateur, soit sur le terminal, mais via un logiciel différent du navigateur, soit sur un dispositif connecté à ce terminal.

Dans un mode particulier de réalisation, le type de donnée d'invocation correspond à l'un quelconque parmi :
- un numéro de téléphone ;
- une adresse postale ;
- une adresse mail ;
- une donnée multimédia ; et
- un URL (pour « Uniform Resource Locator » en anglais).

Dans un mode particulier de réalisation, les différentes étapes du procédé d'invocation d'un service applicatif par un navigateur sont déterminées par des instructions de programmes d'ordinateurs.

En conséquence, l'invention vise aussi un programme d'ordinateur sur un support d'informations, ce programme étant susceptible d'être mis en oeuvre par un ordinateur, ce programme comportant des instructions adaptées à la mise en oeuvre du procédé d'invocation d'un service applicatif par un navigateur tel que mentionné ci-dessus.

Ce programme peut utiliser n'importe quel langage de programmation, et être sous la forme de code source, code objet, ou de code intermédiaire entre code source et code objet, tel que dans une forme partiellement compilée, ou dans n'importe quelle autre forme souhaitable.

L'invention vise aussi un support d'informations lisible par un ordinateur, et comportant des instructions d'un programme d'ordinateur tel que mentionné ci-dessus.

Le support d'informations peut être n'importe quelle entité ou dispositif capable de stocker le programme. Par exemple, le support peut comporter un moyen de stockage, tel qu'une ROM, par exemple un CD ROM ou une ROM de circuit microélectronique, ou encore un moyen d'enregistrement magnétique, par exemple une disquette (floppy dise) ou un disque dur.

D'autre part, le support d'informations peut être un support transmissible tel qu'un signal électrique ou optique, qui peut être acheminé via un câble électrique ou optique, par radio ou par d'autres moyens. Le programme selon l'invention peut être en particulier téléchargé sur un réseau de type Internet.

Alternativement, le support d'informations peut être un circuit intégré dans lequel le programme est incorporé, le circuit étant adapté pour exécuter ou pour être utilisé dans l'exécution du procédé en question.

### Brève description des figures

D'autres caractéristiques et avantages de l'invention apparaîtront à la lecture de la description qui suit, faite en référence aux dessins annexés dans lesquels :
- la figure 1 représente un terminal conforme à l'invention permettant l'invocation d'un service applicatif et communicant avec un serveur distant ;
- la figure 2 représente un terminal conforme à l'invention ;
- la figure 3 représente les étapes principales d'un procédé d'invocation conforme à l'invention ;
- la figure 4 représente un mode de réalisation particulier d'un procédé d'invocation de services applicatifs conforme à l'invention ;
- la figure 5 représente un vision schématique de l'étape de réception d'une première instruction, cette étape étant comprise dans un procédé conforme à l'invention ;
- la figure 6 représente un mode de réalisation particulier d'un procédé conforme à l'invention ;
- la figure 7 représente un vision schématique de l'étape de fourniture d'une notification, cette étape étant comprise dans un procédé conforme à l'invention ;
- les figures 8 et 9 représentent deux modes de réalisation particuliers d'un procédé conforme à l'invention ;
- la figure 10 représente une table dans laquelle sont enregistrées des types de donnée d'invocation associés à des services ; et
- les figures 11 à 17 représentent des pages chargées dans un navigateur.

### Description détaillée de modes de réalisation

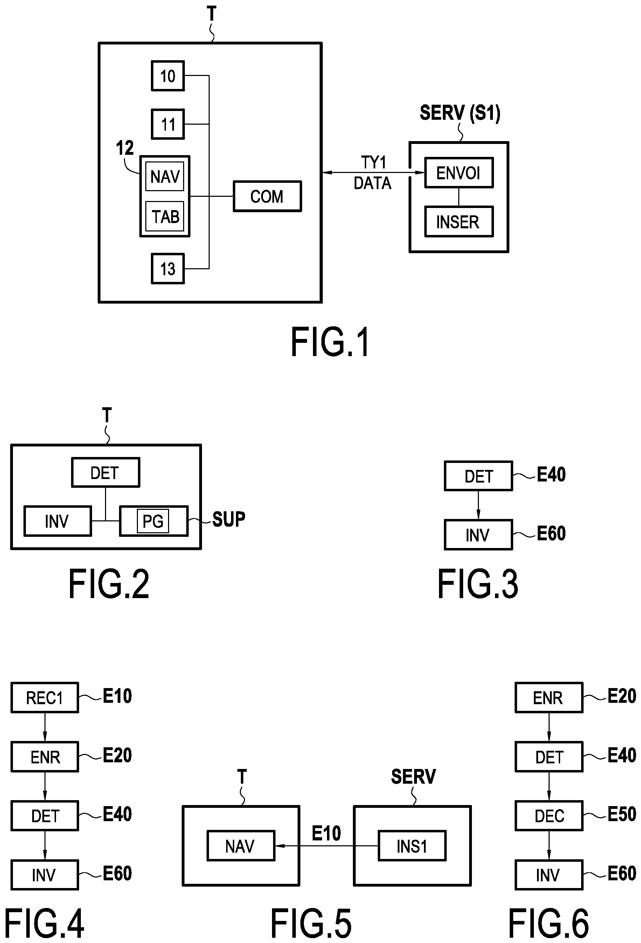

La **figure 1** représente un terminal T conforme à l'invention, en communication avec un serveur distant SERV fournissant un service S1.

Ce terminal T met en oeuvre les différentes étapes d'un procédé d'invocation d'un service applicatif telles que décrites en référence aux figures 3 à 9.

Ce terminal T peut consister par exemple en un ordinateur, un téléphone, un téléphone intelligent (ou « Smartphone » en anglais), une tablette ou un quelconque objet connecté.

Dans le mode de réalisation décrit ici, le terminal T possède l'architecture matérielle d'un ordinateur.

Ainsi, le terminal T comporte un processeur 10, une mémoire 11 de type ROM (pour « Read-only memory » en anglais), une mémoire non volatile réinscriptible 12 (de type Flash par exemple), une mémoire vive de type RAM (pour « Random-access memory », en anglais) 13 et un module COM de communication.

La mémoire non volatile 12 du terminal T constitue un support d'enregistrement conforme à l'invention, lisible par le processeur 10 et sur lequel est enregistré un navigateur NAV permettant de charger une ou plusieurs pages, par exemple une page fournissant le service S1 et dont les données associées DATA sont reçues depuis le serveur distant SERV et envoyées par un premier module ENVOI de ce serveur.

Comme expliqué précédemment, les données de page DATA associées à la page fournissant le service S1 peuvent comporter :
- une description HTML (« HyperText Markup Language ») permettant de structurer et mettre en forme la page fournissant le service S1 lors de son chargement dans un navigateur ;
- des fonctions en langage de programmation « Javascript » pouvant être appelée dans la description HTML ; et
- d'autres données, par exemple des données multimédias, pouvant être également appelées dans la description HTML, par exemple des images à afficher.

Le format et la structure des données de page DATA peuvent toutefois varier selon l'exemple de réalisation considéré.

Ces données de pages DATA peuvent en outre être traitées par le terminal T pour charger dans le navigateur NAV la page fournissant le service S1, mais également pour invoquer le service S1 dans une autre page, différente de celle proposant initialement le service S1 et comme il sera décrit ultérieurement.

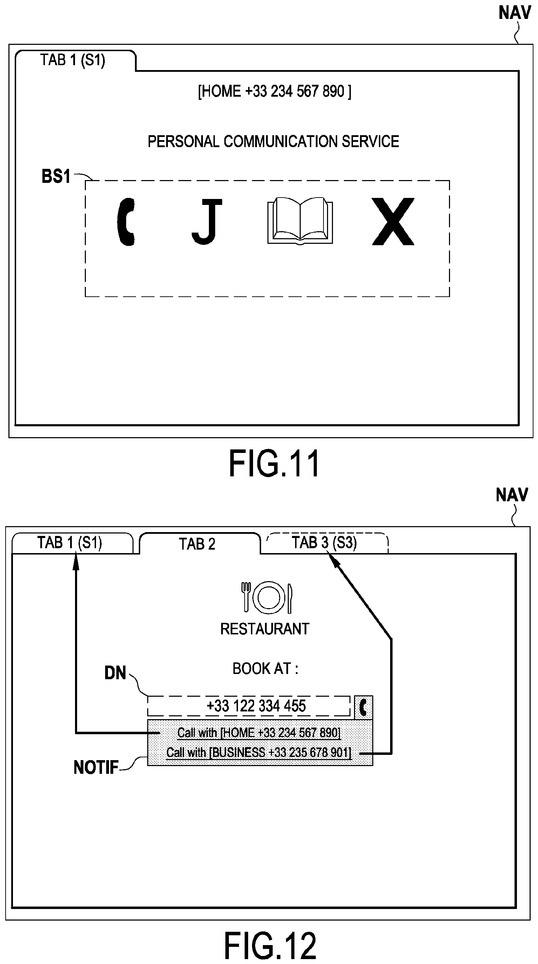

La mémoire non volatile 12 du terminal T comporte également une table TAB, dont le contenu sera détaillé en référence à la figure 11, et comportant en outre un ou des types de données TY1 que le service S1 est apte à traiter.

Le serveur distant SERV comporte également un second module INSER permettant d'insérer dans ces données de page DATA, ou d'envoyer de manière séparée, au moins un type de données TY1 utilisable par le service S1.

Le serveur distant SERV est géré par un fournisseur du service S1 et comporte un logiciel non représenté permettant de fournir ce service S1 au terminal T.

A noter que, les éléments communs ou analogues à plusieurs figures portent les mêmes signes de référence et présentent des caractéristiques identiques ou analogues, de sorte que ces éléments communs ne sont généralement pas à nouveau décrits par souci de simplicité.

La **figure 2** représente le terminal T de la figure 1 selon un mode de réalisation particulier. Le terminal T met en oeuvre un navigateur NAV configuré pour invoquer un service applicatif.

Le terminal T comporte un module DET permettant de détecter, dans une première page chargée dans le navigateur NAV, une donnée d'invocation conforme à un type TY1 de donnée enregistré pour ce service applicatif.

Le terminal T comporte aussi un module INV permettant d'invoquer, dans cette première page chargée, ce service à partir de cette donnée d'invocation.

Le terminal T comporte également un support d'information SUP dans lequel est stocké un programme PG, tous deux conformes à l'invention, le programme PG comportant des instructions pour l'exécution des étapes d'un procédé d'invocation d'un service applicatif conforme à l'invention, dont les étapes seront détaillées en référence aux figures 3 à 9.

Dans un mode particulier de réalisation, le terminal T comporte également un module ENR non représenté permettant d'enregistrer le type de donnée d'invocation associé avec le service, par exemple dans la table TAB.

La **figure 3** représente un procédé général d'invocation d'un service applicatif S1 conforme à l'invention.

Ce procédé peut être mis en oeuvre par un terminal T tel que décrit en référence aux figures 1 ou 2.

Le service applicatif S1 peut par exemple consister en un service disponible sur Internet, un service de mise en relation comme par exemple un service téléphonique ou visiophonique, un service de navigation, etc.

Ce procédé comporte une première étape E40 de détection, dans un première page chargée (notée ici TAB2) dans le navigateur NAV, d'une donnée d'invocation DN conforme à un type de donnée d'invocation TY1 enregistré en association avec le service S1.

Ce type de donnée d'invocation TY1 correspond au type de donnée utilisable par le service S1.

Par exemple, en référence à la **figure 12****,** une première page TAB2 est chargée dans le navigateur NAV et affiche la page Internet d'un restaurant.

Dans ce mode de réalisation, la donnée d'invocation DN correspond au numéro de téléphone du restaurant visible sur la page chargée . La donnée d'invocation DN est contenue dans les données associées à la page chargée TAB2.

Plus précisément, cette donnée d'invocation DN peut être contenue dans la description HTML associée à la page chargée TAB2 et reçue depuis le serveur distant SERV.

Une description HTML générale de la première page chargée TAB2 représentée à la figure 12 pourrait présenter une structure de ce type (numéros de ligne ajoutés) :
1 <html>
2 <image> 'http://www.exemple/image/assiette.png' </image>
3 RESTAURANT
4 BOOK AT :
5 <phone> + 33 122 333 455 </phone>
6 </html>

Ici, la donnée DN correspondant au numéro de téléphone est détectable à la ligne 5 de cette description HTML, entre les balises <phone> et </phone>, ces balises indiquant par ailleurs ici explicitement le type de donnée TY1 utilisé (« phone » en anglais correspondant au type de donnée « téléphone »).

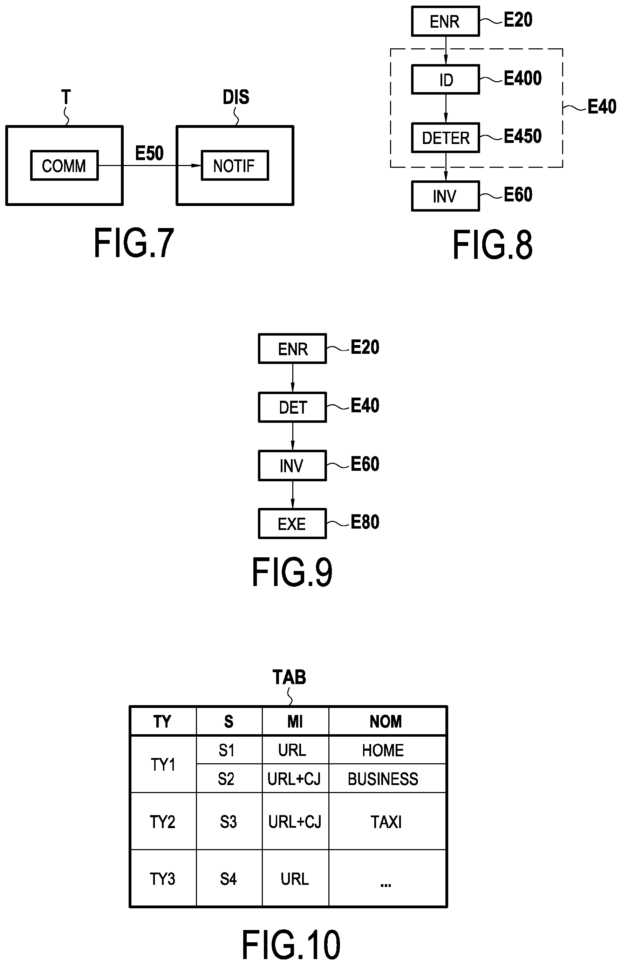

Ce type de donnée d'invocation TY1 est enregistré, par exemple dans la table TAB stockée dans le terminal T, en association avec un identifiant du service S1. Un exemple de table TAB est représenté plus précisément à la figure 10.

Ce type de donnée d'invocation TY1 peut également être associé dans la table TAB à un identifiant HOME permettant de le différencier d'un autre type de donnée ou d'un même type de donnée associé à un autre service.

Enfin, ce type de donnée d'invocation TY1 peut être associé, dans la table TAB, à des données (URL dans cet exemple) définissant la méthode d'invocation MI mise en oeuvre par le navigateur NAV pour invoquer le service S1.

Dans ce mode de réalisation, la méthode d'invocation correspond à la méthode dite « URL », qui sera détaillée par la suite.

L'étape E40 de détection est suivie d'une étape E60 d'invocation, dans la première page chargée TAB2, du service S1 à partir de cette donnée d'invocation DN, correspondant dans le mode de réalisation décrit ici au numéro de téléphone « +33 122 334 455 ».

Ainsi, si le service S1 propose par exemple un service de mise en relation comme un service de téléphonie, la donnée d'invocation détectée DN correspondant à un numéro de téléphone peut être utilisée comme variable d'entrée du service de téléphonie S1.

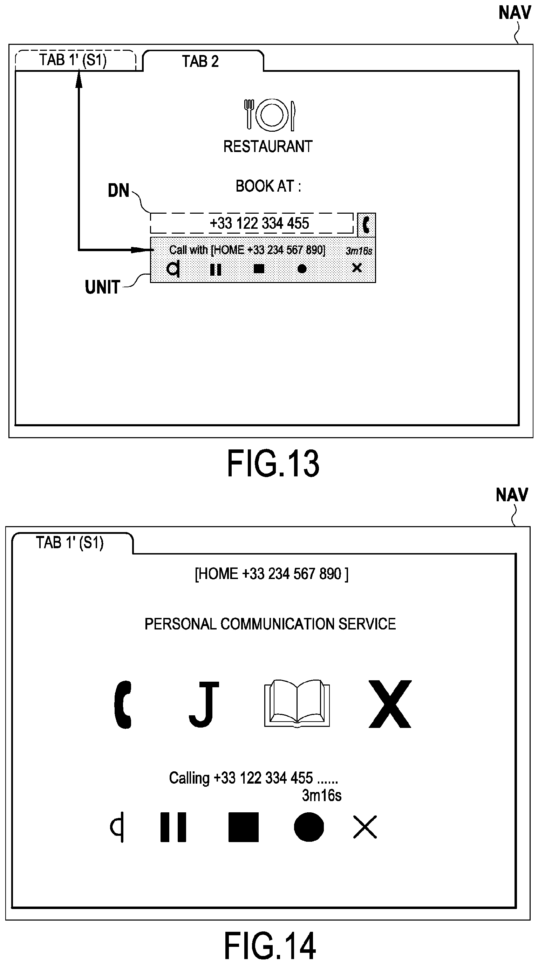

Ce service est alors invoqué dans la première page chargée TAB2, par exemple sous l'action de l'utilisateur, puis éventuellement contrôlable dans cette même page chargée TAB2, par exemple au moyen d'une unité de commande UNIT, tel qu'illustré en référence à la **figure 13****.**

Dans ce mode de réalisation, un utilisateur du terminal T pourra, directement sur la première page chargée TAB2 du navigateur NAV correspondant au site du restaurant, accéder au service de téléphonie S1 pour appeler le restaurant dont le numéro s'affiche dans cette première page chargée TAB2.

Dans ce mode de réalisation, l'invocation du service S1 correspond par exemple au déclenchement de la fonction « appel » du service, permettant d'appeler un numéro.

Le service S1 invoqué sera exécuté dans une troisième page TAB1' chargée au moment de l'invocation et représentée en référence à la **figure 14****.**

La page TAB1' exécute ici la fonction « appel » du service de téléphonie S1.

Cette page TAB1' peut consister en une mise à jour de la page TAB1 proposant le service S1, précédemment chargée.

En variante, la page TAB1 proposant le service S1 n'est pas chargée initialement et le chargement de cette page TAB1' est déclenché dans le navigateur NAV au moment de l'étape d'invocation et ne constitue donc pas une mise à jour.

Dans le cas où une unité de commande UNIT permettant de contrôler le service, ajoutée par le navigateur NAV, est affichée dans la première page TAB2, l'utilisateur pourra tout de même consulter cette troisième page TAB1' s'il souhaite utiliser des fonctions du service non disponible via l'unité de commande UNIT, par exemple consulter son agenda ou sa liste de contact.

Dans ce mode de réalisation, la page TAB1' exécutant le service S1 et la page TAB2 permettant de contrôler le service S1 interagissent, de manière avantageuse pour l'utilisateur qui peut choisir de rester sur la première page TAB2 ou de consulter l'autre page TAB1'.

Dans un mode particulier de réalisation, l'invocation du service S1 déclenche l'affichage en premier plan dans le navigateur NAV de la troisième page TAB1' exécutant le service.

En variante, l'invocation du service S1 déclenche uniquement le chargement de la troisième page TAB1' et la première page chargée TAB2 correspondant au site du restaurant reste affichée au premier plan, la troisième page TAB1' étant par exemple chargée dans un autre onglet du navigateur NAV non visible.

Dans un mode particulier de réalisation, le procédé d'invocation d'un service applicatif par un navigateur comporte une première étape E20 non représentée à la figure 3, cette étape E20 permettant d'enregistrer, préalablement à l'étape E40 de détection, le ou les types de donnée d'invocation TY1 associés au service à invoquer S1.

Le ou les types de donnée d'invocation sont par exemple enregistrés avec un identifiant du service S1.

Cet enregistrement E20 peut se faire, par le terminal T dans une table TAB telle que représentée à la figure 10.

La **figure 4** représente les étapes d'un procédé d'invocation d'un service applicatif S1 par un navigateur NAV, selon un mode de réalisation particulier de l'invention.

Ce procédé d'invocation peut être mis en oeuvre dans un terminal T tel que décrit en référence aux figures 1 et 2.

Ce procédé reprend les étapes E20, E40, et E60 du procédé telles que décrites précédemment.

Dans ce mode de réalisation, le procédé d'invocation d'un service applicatif S1 comporte une étape E10 préalable à l'étape d'enregistrement E20 ou à l'étape de détection E40, cette étape E10 permettant la réception d'une première instruction INS1 définissant une deuxième page TAB1 fournissant le service S1, cette instruction INS1 définissant le type de donnée d'invocation TY1 associé au service S1.

Dans ce mode de réalisation, et en référence à la **figure 5****,** le terminal T reçoit, en étape E10, depuis le serveur distant SERV, l'instruction INS1 qu'il exécute dans le navigateur NAV, cette exécution permettant en particulier d'enregistrer à l'étape E20 d'enregistrement le type de donnée d'invocation TY1 dans la table TAB.

Dans un mode particulier de réalisation, cette première instruction INS1 correspond plus largement à un ensemble des données de page DATA associé à la page TAB1 proposant le service S1.

Dans un mode particulier de réalisation, cette première instruction INS1 correspond à la description HTML de la page TAB1 définissant le service S1, cette description HTML pouvant en outre appeler des fonctions en langage Javascript ou éventuellement d'autres données, par exemple multimédia.

Dans un mode particulier de réalisation, en référence à la **figure 11****,** le navigateur NAV recevant l'instruction INS1 l'exécute et charge en conséquence dans une deuxième page TAB1 le service S1, correspondant ici à un service de téléphonie, permettant d'appeler un correspondant à partir du numéro [HOME +33 234 567 890], par exemple le numéro de téléphone personnel de l'utilisateur, vers un numéro de téléphone quelconque pris comme donnée d'entrée du service.

Le service S1 présente certaines fonctions (appeler, consulter une liste de contact, raccrocher,...) pouvant être utilisées par exemple en cliquant sur des objets graphiques BS1.

Parallèlement au chargement de cette page TAB1, un élément de code Javascript contenu dans les données de page associé à la page TAB1 peut être exécuté et permet entre autre l'enregistrement dans la table TAB du type de donnée d'invocation TY1 associé au service S1, ici le type de donnée « numéro de téléphone ».

Cette première instruction INS1 permet donc de définir le type de donnée d'invocation TY1 utilisable par le service S1. Dans un exemple particulier, une pluralité de types de donnée d'invocation TY1 utilisables par le service S1 est spécifiée dans la première instruction INS1.

Dans un mode particulier de réalisation, la description HTML de la page TAB1 fournissant le service S1 appelle un élément de code Javascript pouvant éventuellement être standardisé comme expliqué précédemment.

Ce code Javascript est compris dans les données de page DATA associé à la page TAB1 et fourni par le serveur distant SERV.

L'exécution de cet élément de code permet au navigateur NAV d'enregistrer le type de donnée d'invocation TY1 dans le terminal T, par exemple dans la table TAB.

L'exécution de cet élément de code permet également de fournir au navigateur des données lui permettant de comprendre que le service S1 associé au type de donnée d'invocation TY1, est invocable, et par quelle méthode il peut l'invoquer.

Par exemple, cet élément de code Javascript standardisé pourrait être le suivant : RegisterDataService(TYn, URL, null), pour une méthode d'invocation dite « URL » (URL dans la table TAB de la figure 10), ou RegisterDataService(TYn, URL, functionQ), pour une méthode d'invocation dite « Callback Javascript » (URL + CJ dans la table TAB de la figure 10).

L'exécution de cet élément de code peut permettre d'enregistrer dans la table TAB :
- le type de donnée d'invocation TYn ;
- une adresse réseau URL, visant par exemple une page proposant le service S1 ou une page proposant une fonction particulière de ce service ; et
- dans le cas d'une méthode d'invocation Callback Javascript, une fonction « function » pouvant être invoquée lors de l'étape (E60) d'invocation du service ;
ces différents éléments étant enregistrés de manière associée, par exemple dans une ligne de la table TAB associée à un identifiant NOM.

Dans le cas particulier du service de téléphonie S1, cet élément de code pourrait être écrit sous la forme : RegisterDataService(TY1, http://communicationservice/number, null) (dans le cas de la méthode d'invocation URL) ou RegisterDataService(TY1, http://communicationservice/number, « CreatecallQ ») (dans le cas de la méthode d'invocation Callback Javascript).

Dans ce mode particulier de réalisation, le navigateur, en exécutant cet élément de code, enregistre dans la table TAB à l'étape E20 d'enregistrement le type de donnée d'invocation TY1 correspondant au type numéro de téléphone, et l'adresse réseau http://communicationservice/number pointant vers une page proposant par exemple la fonction d'appel du service S1.

Elle peut en variante correspondre à l'adresse réseau pointant vers la page TAB1 proposant le service S1.

Dans un mode particulier de réalisation, lors de l'étape E40 de détection, la page pointée par l'adresse réseau http://communicationservice/number est chargée dans le navigateur NAV.

Dans le cas particulier de la méthode URL, lors de l'étape E60 d'invocation, le navigateur NAV peut ajouter (ou concaténer) une donnée DN (dans cet exemple le numéro de téléphone du restaurant +33122334455) détectée dans la première page TAB2 à l'adresse réseau URL http://communicationservice/number, pour construire par exemple une nouvelle adresse réseau http://communicationservice/number/+33122334455, pointant vers la troisième page TAB1' que le navigateur va ensuite charger.

La page TAB1' peut correspondre à une mise à jour de la page pointée par l'adresse http://communicationservice/number si cette page est déjà chargée dans le navigateur.

En variante, la page pointée par l'adresse http://communicationservice/number n'est pas chargée initialement et le chargement de la page TAB1' est déclenché dans le navigateur NAV au moment de l'étape d'invocation et ne constitue donc pas une mise à jour.

Cette troisième page TAB1' exécute le service de téléphonie et est représentée à la figure 14.

Dans le cas particulier de la méthode Callback Javascript, le navigateur enregistre en plus du type de donnée et de l'adresse réseau, la chaine de caractères « Createcall() » correspondant à une fonction en langage Javascript qui sera invoquée lors de l'invocation du service.

Dans ce mode de réalisation particulier, lors de l'étape E60 d'invocation, le navigateur NAV charge la page pointée par l'adresse réseau http://communicationservice/number puis invoque la fonction Javascript « Createcall() » , déclenchant le chargement de la troisième page TAB1' de la figure 14 exécutant le service.

En variante, la page pointée par l'adresse réseau http://communicationservice/number est chargée dans le navigateur lors de l'étape E40 de détection, et lors de l'étape E60 le navigateur NAV invoque la fonction « Createcall() » dans cette page sans la charger.

Cette adresse réseau permet en d'autres termes d'indiquer au navigateur dans quelle page invoquer la fonction Javascript pour invoquer le service et donc pour charger la page TAB1' exécutant le service.

Dans un mode particulier de réalisation, l'élément de code comporte également des informations précisant si la troisième page chargée TAB1' doit être affichée en premier plan dans le navigateur ou si elle doit simplement être chargée, par exemple dans un onglet non affiché du navigateur NAV, comme c'est le cas à la figure 13.

La fonction « Createcall() » pourrait être définie de la manière suivante (numéro de ligne ajoutés) :

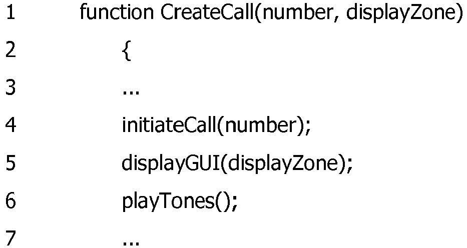

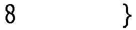

Cette fonction prend comme arguments d'entrée une variable de type numéro de téléphone "number", et éventuellement une variable liée à une page du navigateur « displayZone ».

De manière avantageuse, la signature de cette fonction, c'est-à-dire le nombre d'arguments d'entrée et leurs types (chaine de caractère, nombre entier, etc.) peut faire l'objet d'une normalisation par les fournisseurs de service.

Dans cet exemple particulier, la fonction « Createcall » comporte :
- à la ligne 4, une fonction initiateCall(number) permettant d'initier un appel téléphonique vers le numéro de téléphone « number » pris en argument ;
- à la ligne 5, une fonction displayGUI(displayZone) permettant d'afficher un élément graphique, par exemple un encadré (ou « iframe » dans le langage HTML) dans la page définie par « displayZone », par exemple la première page chargée TAB2 ;
- à la ligne 6, une fonction playTonesQ permettant de jouer une alarme ;
- etc...

Cette fonction sera invoquée, dans le cas d'une méthode d'invocation Callback Javascript, lors de l'étape E60 d'invocation du service S1, et prendra en argument (pour la variable « number ») la donnée DN détectée correspondant dans ce mode de réalisation au numéro de téléphone du restaurant.

Son exécution permet dans ce mode de réalisation d'exécuter le service S1.

La **figure 6** représente un procédé d'invocation d'un service applicatif S1 par le navigateur NAV, conforme à un mode réalisation particulier de l'invention.

Ce procédé est mis en oeuvre par un terminal T, tel que représenté en références aux figures 1 et 2.

Ce procédé reprend les étapes générales E20, E40 et E60 précédemment décrites en référence aux figures 3 à 5.

Dans ce mode de réalisation, le procédé comporte également une étape E50 de déclenchement de la fourniture d'une notification NOTIF indiquant l'accessibilité, dans la première page chargée TAB2, du service S1.

Dans un mode particulier de réalisation, lors de cette étape de déclenchement, c'est le navigateur NAV qui fournit la notification NOTIF et qui l'affiche dans la première page chargée TAB2.

Par exemple, en référence à la figure 12, le navigateur NAV affiche, dans la page chargée TAB2 du navigateur NAV, la notification NOTIF pointant le numéro de téléphone DN détecté à l'étape E40, cette notification NOTIF comportant une première ligne « Call with [HOME +33 234 567 890] ».

Cette première ligne indique l'accessibilité du service S1 de téléphonie dont la page TAB1 a été précédemment chargée au moins une fois.

Elle permet également, dans ce mode de réalisation, d'invoquer le service S1 de téléphonie prenant en entrée la donnée DN, par exemple en cliquant sur la ligne « Call with [HOME +33 234 567 890] »., et donc appeler le restaurant.

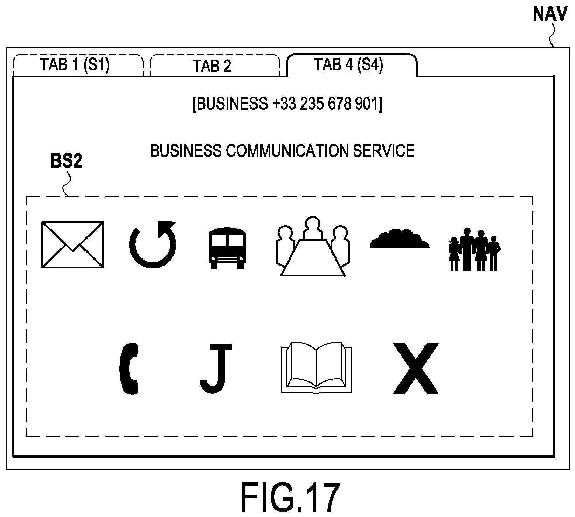

Cette notification NOTIF peut également comporter une deuxième ligne « Call with [BUSINESS +33 235 678 901] » indiquant l'accessibilité d'un deuxième service S4 fourni par exemple par une page TAB4 telle que représentée à la figure 17.

Ce deuxième service comporte également différentes fonctions accessibles par exemple en cliquant sur les éléments graphiques BS2. Ces fonctions prennent également en entrée un numéro de téléphone correspondant à la donnée d'invocation DN, mais elles correspondent à un deuxième service de téléphonie, par exemple depuis un numéro de téléphone différent comme le numéro de téléphone professionnel de l'utilisateur.

En variante, l'étape de déclenchement E50 comporte une étape d'envoi d'une commande COMM vers un dispositif, cette envoi causant la fourniture de la notification NOTIF par ce dispositif.

Dans un mode particulier de réalisation, ce dispositif est le terminal T mettant en oeuvre le procédé d'invocation, et la commande COMM permet par exemple d'appeler un logiciel préenregistré dans le terminal T, ce logiciel permettant la fourniture de la notification NOTIF par le terminal T.

Par exemple, le logiciel fournissant la notification NOTIF peut permettre d'afficher une fenêtre « pop-up » sur une interface du terminal T et donc d'indiquer à l'utilisateur du terminal T l'accessibilité du service.

En variante, la commande COMM est envoyée vers un dispositif DIS externe au terminal T tel que représenté en référence à la **figure 7****.**

Ce dispositif DIS peut consister en un deuxième terminal, un composant périphérique du terminal T, comme par exemple un haut-parleur, ou encore un objet connecté.

Ce dispositif DIS recevant la commande COMM fournit alors la notification NOTIF à l'utilisateur indiquant l'accessibilité du service S1, par exemple sous forme d'un message contenant une donnée multimédia, par exemple un texte, une image ou une vidéo.

A noter par ailleurs que diverses formes de notification (graphique, audio etc.) sont possibles à l'étape E50 pour indiquer l'accessibilité, dans la première page chargée TAB2, du service S1.

La **figure 8** représente un procédé d'invocation d'un service applicatif S1 par un navigateur NAV conforme à un mode de réalisation particulier de l'invention.

Ce procédé peut être mis en oeuvre par un terminal T tel que représenté en références aux figures 1 ou 2.

Ce procédé reprend les étapes générales E20, E40 et E60, précédemment décrites en référence aux figures 3 à 6.

Dans ce mode de réalisation, l'étape E40 de détection d'une donnée d'invocation DN dans une première page chargée TAB2 conforme au type de données d'invocation TY1 comporte deux sous-étapes E400 et E450.

A l'étape E400, une ou plusieurs données d'invocation DN présentes dans la première page chargée TAB2 sont identifiées.

Par exemple, en référence à la figure 13, la donnée d'invocation DN correspondant au numéro de téléphone +33 122 334 455 du restaurant peut être identifiée par le navigateur NAV, par exemple dans la description HTML de cette page chargée TAB2.

L'étape E400 est suivie d'une étape E450 de détermination pour déterminer, pour chaque donnée identifiée DN identifiée, si cette donnée est conforme au type de données TY1.

Dans un mode particulier de réalisation, ce type de donnée TY1 correspond à un numéro de téléphone, et peut être utilisé par un service S1 de téléphonie.

Le navigateur détermine alors en étape E450, si la page chargée TAB2 comporte une donnée conforme au type de donnée « numéro de téléphone », par exemple en analysant la description HTML associée à cette page TAB2 telle qu'elle a été détaillée précédemment.

Dans un mode particulier de réalisation, lors de l'étape E400 d'identification, chaque donnée d'invocation DN est identifiée en réponse à une commande d'un utilisateur reçue par le navigateur NAV.

Par exemple, l'utilisateur peut cliquer sur ou sélectionner cette donnée d'invocation DN avec un pointeur (ou tout autre moyen approprié) pour commander au navigateur NAV de déterminer en étape E450, si cette donnée sélectionnée est conforme au type de donnée TY1.

En variante, cette donnée d'invocation DN est identifiée automatiquement à l'étape E400, par exemple par analyse automatique de la description HTML de la page.

Dans un mode particulier de réalisation, l'étape E40 de détection peut consister en une étape d'analyse sémantique de la première page chargée TAB2.

Dans ce mode de réalisation, le navigateur NAV peut par exemple parcourir la description HTML associée à la page chargée TAB2 et détecter un texte dont le format correspond à un certain type d'invocation.

Dans la description HTML précédemment détaillée page 10 lignes 17 à 22, le navigateur NAV peut détecter à la ligne 5 la donnée d'invocation DN « + 33 122 334 455 » en parcourant cette description HTML.

Par exemple, le navigateur NAV peut détecter qu'une suite de caractères commençant par le caractère « + » puis suivie d'un ensemble de dix chiffres correspond à une donnée d'invocation DN conforme au type de donnée d'invocation correspondant à un numéro de téléphone.

En variante, l'étape E40 de détection correspond à une étape de détection d'un marqueur (ou « tag » en anglais) codé dans la première page chargée TAB2 en association avec la donnée d'invocation DN.

Dans un mode particulier de réalisation, ce marqueur codé peut correspondre à une ou plusieurs balises, dite « URL Request Identifier », insérées dans la description HTML associée à cette page chargée TAB2.

Dans le mode de réalisation décrit ici, deux balises sont placées de part et d'autre d'une donnée d'invocation pour marquer cette dernière comme étant d'un type prédéfini.

Le contenu de cette balise indique ainsi un type de donnée d'invocation préalablement déclaré, par exemple tel que défini et normalisé sur le site Internet http://schema.org.

Par exemple, dans le code HTML associé à la table TAB2 et précédemment détaillé, les balises <phone> et </phone> permettent d'indiquer que la donnée comprise entre ces balises correspond à un numéro de téléphone.

La **figure 9** représente un procédé d'invocation d'un service applicatif S1 par un navigateur NAV selon un mode de réalisation particulier de l'invention.

Ce procédé peut être mis en oeuvre par un terminal T tel que représenté aux figures 1 et 2.

Ce procédé reprend les étapes générales E20, E40 et E60 telles que décrites en référence aux figures 3 à 6 et également à la figure 8.

Ce procédé comporte une étape E80 d'exécution du service S1 dans la troisième page TAB1'.

Dans un mode de réalisation dans lequel la méthode d'invocation employée est la méthode Callback Javascript, l'exécution du service dans la page TAB1' peut être simultanée à l'affichage, dans la première page chargée TAB2, d'une unité de commande UNIT accessible par un utilisateur pour contrôler le service invoqué S1.

Ce mode de réalisation correspond à une méthode d'invocation Callback Javascript évoquée précédemment, bien que d'autres méthodes d'invocation soient possibles.

Dans un mode particulier de réalisation, la navigateur NAV affiche lors de l'étape d'invocation E60, dans la page chargée TAB2, un encadré (ou « iframe » dans le langage HTML) dont le contenu est défini par la fonction Javascript « function » comprise dans l'instruction INS1 invoquée, tel qu'expliqué précédemment.

En référence à la figure 13, le navigateur NAV affiche dans la première page chargée TAB2 une unité de commande UNIT permettant de contrôler le service S1 de téléphonie prenant en entrée la donnée d'invocation DN correspondant à un numéro de téléphone.

Par exemple, un utilisateur peut, via cette unité de commande UNIT, agir sur la conversation téléphonique mise en oeuvre par le service S1 dans la page chargée TAB2, par exemple mettre en pause la conversation, l'enregistrer, raccrocher, etc.

En variante, l'invocation du service S1 cause l'affichage en premier plan de la page TAB1' qui exécute à l'étape E80 le service S1 alors disponible pour l'utilisateur, sans afficher d'unité de commande dans la page TAB2.

Ce mode de réalisation correspond à une méthode d'invocation URL.

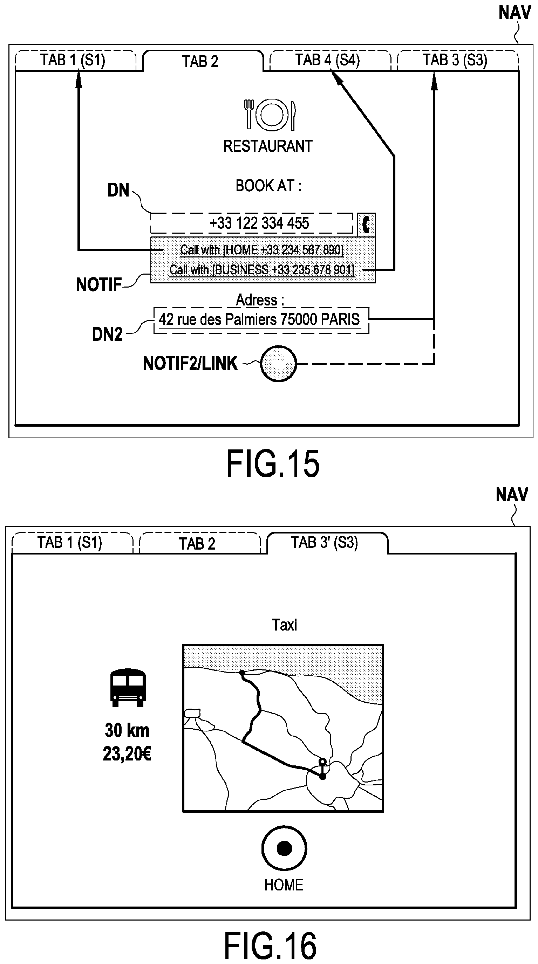

Par exemple, dans ce mode de réalisation particulier et en référence à la **figure 15****,** le navigateur NAV affiche une page chargée TAB2 correspondant à la page internet d'un restaurant, comportant une donnée d'invocation DN2 correspondant à l'adresse du restaurant, ici « 42 rue des Palmiers 75000 PARIS ».

A l'étape E40, le navigateur NAV détecte dans cette première page chargée TAB2 la donnée d'invocation DN2 conforme au type de donnée d'invocation « adresse » TY2.

Par exemple, le navigateur NAV détecte cette donnée dans la description HTML suivante permettant d'afficher l'adresse dans le navigateur : <address>42 rue des Palmiers 75000 PARIS </address>.

Le navigateur NAV peut détecter cette donnée par analyse sémantique en identifiant une chaine de caractères conforme à une adresse, ou encore en détectant un ou plusieurs marqueurs codés représentatifs d'un type de donnée particulier, ici <address> et </address>.

Ces marqueurs particuliers entre balises ont été standardisés et correspondent aux marqueurs présents sur le site Internet http://schema.org.

En variante, d'autres marqueurs permettent de détecter la donnée d'invocation.

Dans un mode particulier de réalisation, cette étape d'identification E40 est suivie de l'étape E50 d'affichage d'une notification NOTIF2, ici représentant un globe terrestre et indiquant l'accessibilité d'un service S3, par exemple un service de taxi.

En étape E60, l'utilisateur peut cliquer, directement sur l'adresse affichée si la notification NOTIF2 ne s'affiche pas, ou en variante sur cette notification NOTIF2, invoquant alors le service S3, et causant le chargement d'une troisième page TAB3' telle que représentée en référence à la **figure 16****.**

Cette troisième page TAB3' propose un service S3 correspondant, dans cet exemple, à un service de taxi.

Dans un autre mode de réalisation, l'élément graphique LINK représente un globe terrestre pointant vers un adresse URL.

Par exemple, cette adresse URL peut être sous la forme HTML suivante :
href="http://location.map.test?42+rue+des+Palmiers+75000+PARIS+France&service=Jaer oiuyAZerbuiroezeru"><img src="Map_Pin.png" border="1" width="50" height="50"

Cette description HTML permet à la fois l'affichage de l'image « Map_Pin.png » et également de pointer vers un service de géolocalisation http://location.map.test permettant ici de localiser le restaurant grâce à son adresse.

Dans ce mode de réalisation, la donnée d'invocation correspond à l'adresse « 42+rue+des+Palmiers+75000+PARIS+France » et peut être détectée par le navigateur NAV à l'étape E40 de détection en analysant cette adresse URL.

Cette donnée peut alors être utilisée comme donnée d'entrée d'un service quelconque (par exemple le service de Taxi S3) pouvant utiliser en entrée un type de donnée d'invocation « adresse postale ».

Ce service pourra alors être invoqué en réponse à une action de l'utilisateur, par exemple en cliquant sur une notification non représentée.

La **figure 10** représente une table TAB dans laquelle sont enregistrés en étape E20 les types de donnée d'invocation TY associés avec le ou les services applicatifs pouvant être invoqués par le navigateur NAV.

Dans la table TAB, un premier type de donnée d'invocation TY1 correspondant au type de donnée « numéro de téléphone », est associé à deux services applicatifs S1 et S2.

Ces deux services proposent par exemple tous deux des services de téléphonie tels que représentés en référence aux figures 11 et 17.

Pour chacun de ces services, une méthode d'invocation MI peut être associée.

Cette méthode d'invocation MI peut être une méthode d'invocation dite URL, ou une méthode d'invocation dite Callback Javascript URL+CJ, telles que décrites précédemment.

Des données liées à cette méthode MI, comme un adresse réseau ou une fonction à appeler pour exécuter le service peuvent y être stockées.

Chaque service S est associé à un identifiant NOM permettant de le distinguer des autres services.

Par exemple, le service S1 traitant un type de donnée TY1 correspondant à un numéro de téléphone et proposant un service de téléphonie à partir d'un numéro de téléphone personnel porte l'identifiant HOME.

Le service S2 porte l'identifiant BUSINESS et correspond à un service de téléphonie permettant d'appeler un correspondant à partir d'un numéro de téléphone professionnel.

Le type de donnée d'invocation TY2 associé à un service S3, correspond à un type de donnée d'invocation « adresse postale », et le service S3 correspond par exemple à un service de taxi. Ce service S3 peut par exemple être nommé TAXI.

Dans un mode particulier de réalisation, cette table TAB est mise à jour à chaque fois qu'un utilisateur utilise un service en chargeant, à partir du navigateur NAV, une page proposant ce service.

La ligne correspondant à un service chargé dans le navigateur NAV peut être effacée lorsque cette page est fermée, ou en variante peut être conservée dans la table TAB, même si l'utilisateur ferme la page.

Un type de donnée d'invocation peut corresponde par exemple à l'un quelconque parmi :
- un numéro de téléphone ;
- une adresse postale ;
- une adresse mail ;
- une donnée multimédia ; et
- un URL.

Ainsi, dans un mode de réalisation non représenté, la donnée d'invocation détectée dans la page chargée correspond à une image, et le service pouvant être invoqué peut par exemple correspondre à un service de traitement d'image.

## Revendications

1. Procédé d'invocation dans un terminal (T) d'au moins un service applicatif (S1, S3) par un navigateur (NAV), ledit procédé comportant :
- une étape (E40) de détection, dans une première page chargée (TAB2) dans ledit navigateur (NAV), d'au moins une donnée d'invocation (DN, DN2) conforme à au moins un type de donnée d'invocation (TY1, TY2) enregistré pour ledit au moins un service (S1, S3) ; et
- une étape (E60) d'invocation, dans ladite première page chargée (TAB2), dudit au moins un service (S1, S3) à partir de ladite au moins une donnée d'invocation (DN) détectée,
ledit procédé étant **caractérisé en ce qu'**il comporte, préalablement à l'étape (E40) de détection, une étape (E10) de réception d'une première instruction (INS1) définissant au moins une deuxième page (TAB1, TAB3) fournissant ledit au moins un service (S1, S3), ladite première instruction (INS1) définissant ledit au moins un type de donnée d'invocation (TY1, TY2), une adresse réseau pointant vers au moins une troisième page (TAB1', TAB3') et une fonction d'invocation dudit au moins un service (S1, S3) ;
ladite étape (E60) d'invocation comportant :
∘ une étape de déclenchement du chargement de ladite au moins une troisième page (TAB1', TAB3') à partir de ladite au moins une adresse; et
∘ une étape d'invocation de ladite fonction ;
ledit procédé comportant une étape (E80) d'exécution dudit au moins un service (S1, S3) dans ladite au moins une troisième page (TAB1', TAB3'), ladite étape d'exécution comportant l'exécution de ladite fonction causant l'affichage, dans ladite première page chargée (TAB2), d'une unité de commande (UNIT) accessible par un utilisateur pour contrôler ledit au moins un service (S1, S3) lors de son exécution dans ladite troisième page (TAB1', TAB3').

2. Procédé selon la revendication 1, comportant, préalablement à l'étape (E40) de détection, une étape (E20) d'enregistrement dudit au moins un type de donnée d'invocation (TY1, TY2).

3. Procédé selon l'un quelconque des revendications 1 ou 2, dans lequel ladite étape (E40) de détection comporte :
- une étape (E400) d'identification d'au moins une donnée d'invocation (DN, DN2) présente dans ladite première page chargée (TAB2) ; et
- une étape (E450) de détermination pour déterminer, pour au moins une dite donnée d'invocation identifiée (DN), si ladite donnée est conforme audit au moins un type de donnée (TY1, TY2).

4. Procédé selon l'une quelconque des revendications 1 à 3, dans lequel ladite étape (E40) de détection comporte au moins l'une parmi :
- une étape d'analyse sémantique de ladite première page chargée (TAB2); et
- une étape de détection d'un marqueur codé dans ladite première page (TAB2) en association avec ladite au moins une donnée d'invocation (DN, DN2).

5. Procédé selon l'une des revendications 1 à 4 dans lequel, lors de ladite étape (E40) de détection, ladite au moins une deuxième page (TAB1, TAB3) n'est pas chargée dans ledit navigateur (NAV).

6. Procédé selon l'une quelconque des revendications 1 à 5, comportant une étape (E50) de déclenchement de la fourniture d'au moins une notification (NOTIF) indiquant l'accessibilité, dans ladite première page chargée (TAB2), dudit au moins un service (S1, S3).

7. Procédé selon la revendication 6, dans lequel lors de ladite étape (E50) de déclenchement, ledit navigateur (NAV) fournit ladite au moins une notification (NOTIF) et affiche cette notification (NOTIF) dans ladite première page chargée (TAB2).

8. Procédé selon la revendication 7, dans lequel ladite étape (E50) de déclenchement comporte une étape d'envoi d'une commande (COMM), vers au moins un dispositif, causant ladite fourniture de ladite notification (NOTIF) par ledit dispositif.

9. Programme d'ordinateur (PG) comportant des instructions pour l'exécution des étapes d'un procédé d'invocation selon l'une quelconque des revendications 1 à 8 lorsque ces instructions sont exécutées par un ordinateur.

10. Support d'enregistrement (SUP) lisible par un ordinateur sur lequel est enregistré un programme d'ordinateur comprenant les instructions pour l'exécution desdites étapes d'un procédé d'invocation selon l'une quelconque des revendications 1 à 8.

11. Terminal (T) permettant l'invocation d'au moins un service applicatif (S1, S3) par un navigateur (NAV), ledit terminal comportant :
- un module de détection (DET) permettant de détecter, dans une première page chargée (TAB2) dans ledit navigateur (NAV), au moins une donnée d'invocation (DN, DN2) conforme au moins à un type de donnée (TY1, TY2) d'invocation enregistré pour ledit au moins un service applicatif (S1, S3) ; et
- un module d'invocation (INV), dans ladite première page chargée (TAB2), dudit au moins un service (S1, S3) à partir de ladite au moins une donnée d'invocation (DN, DN2) détectée,
ledit terminal étant **caractérisé en ce qu'**il comporte des moyens de réception permettant, préalablement à la détection, la réception d'une première instruction (INS1) définissant au moins une deuxième page (TAB1, TAB3) fournissant ledit au moins un service (S1, S3), ladite première instruction (INS1) définissant ledit au moins un type de donnée d'invocation (TY1, TY2), une adresse réseau pointant vers au moins une troisième page (TAB1', TAB3') et une fonction d'invocation dudit au moins un service (S1, S3) ;ladite invocation dudit au moins un service comportant :
∘ une étape de déclenchement du chargement de ladite au moins une troisième page (TAB1', TAB3') à partir de ladite au moins une adresse; et
∘ une étape d'invocation de ladite fonction ;
ledit terminal étant configuré pour exécuter ledit au moins un service (S1, S3) dans ladite au moins une troisième page (TAB1', TAB3'), ladite exécution comportant l'exécution de ladite fonction causant l'affichage, dans ladite première page chargée (TAB2), d'une unité de commande (UNIT) accessible par un utilisateur pour contrôler ledit au moins un service (S1, S3) lors de son exécution dans ladite troisième page (TAB1', TAB3').

## Patentansprüche

1. Verfahren zum Aufrufen wenigstens eines Anwendungsdienstes (S1, S3) in einem Endgerät (T) über einen Browser (NAV), wobei das Verfahren Folgendes aufweist:
- einen Schritt (E40) des Erfassens wenigstens eines Aufrufdatenelements (DN, DN2), das wenigstens einem Aufrufdatentyp (TY1, TY2) entspricht, der für den wenigstens einen Dienst (S1, S3) gespeichert ist, in einer ersten Seite (TAB2), die in den Browser (NAV) geladen ist; und
- einen Schritt (E60) des Aufrufens des wenigstens einen Dienstes (S1, S3) in der geladenen ersten Seite (TAB2) anhand des wenigstens einen erfassten Aufrufdatenelements (DN), wobei das Verfahren **dadurch gekennzeichnet ist, dass** es vor dem Schritt (E40) des Erfassens einen Schritt (E10) des Empfangens einer ersten Anweisung (INS1) aufweist, die wenigstens eine zweite Seite (TAB1, TAB3) festlegt, die den wenigstens einen Dienst (S1, S3) bereitstellt, wobei die erste Anweisung (INS1) den wenigstens einen Aufrufdatentyp (TY1, TY2), eine Netzwerkadresse, die auf wenigstens eine dritte Seite (TAB1', TAB3') verweist, und eine Funktion zum Aufruf des wenigstens einen Dienstes (S1, S3) festlegt; wobei der Schritt (E60) des Aufrufens Folgendes aufweist:
∘ einen Schritt des Auslösens des Ladens der wenigstens einen dritten Seite (TAB1', TAB3') anhand der wenigstens einen Adresse; und
∘ einen Schritt des Aufrufens der Funktion;
wobei das Verfahren ein Schritt (E80) des Ausführens des wenigstens einen Dienstes (S1, S3) in der wenigstens einen dritten Seite (TAB1', TAB3') aufweist, wobei der Schritt des Ausführens das Ausführen der Funktion aufweist, das die Anzeige einer Steuereinheit (UNIT) in der geladenen ersten Seite (TAB2) bewirkt, auf die von einem Benutzer zugegriffen werden kann, um den wenigstens einen Dienst (S1, S3) bei seiner Ausführung in der dritten Seite (TAB1', TAB3') zu steuern.

2. Verfahren nach Anspruch 1, aufweisend, vor dem Schritt (E40) des Erfassens, einen Schritt (E20) des Speicherns des wenigstens einen Aufrufdatentyps (TY1, TY2) .

3. Verfahren nach einem der Ansprüche 1 oder 2, wobei der Schritt (E40) des Erfassens Folgendes aufweist:
- einen Schritt (E400) des Ermittelns wenigstens eines Aufrufdatenelements (DN, DN2), das in der geladenen ersten Seite (TAB2) vorhanden ist; und
- einen Schritt (E450) des Bestimmens, um für wenigstens ein ermitteltes Aufrufdatenelement (DN) zu bestimmen, ob das Datenelement dem wenigstens einen Datentyp (TY1, TY2) entspricht.

4. Verfahren nach einem der Ansprüche 1 bis 3, wobei der Schritt (E40) des Erfassens wenigstens eins von Folgendem aufweist:
- einen Schritt des semantischen Analysierens der geladenen ersten Seite (TAB2); und
- einen Schritt des Erfassens eines codierten Markers in der ersten Seite (TAB2) in Verbindung mit dem wenigstens einen Aufrufdatenelement (DN, DN2).

5. Verfahren nach einem der Ansprüche 1 bis 4, wobei beim Schritt (E40) des Erfassens die wenigstens eine zweite Seite (TAB1, TAB3) nicht im Browser (NAV) geladen ist.

6. Verfahren nach einem der Ansprüche 1 bis 5, aufweisend einen Schritt (E50) des Auslösens des Bereitstellens wenigstens einer Benachrichtigung (NOTIF), die die Zugreifbarkeit des wenigstens einen Dienstes (S1, S3) in der geladenen ersten Seite (TAB2) angibt.

7. Verfahren nach Anspruch 6, wobei beim Schritt (E50) des Auslösens der Browser (NAV) die wenigstens eine Benachrichtigung (NOTIF) bereitstellt und diese Benachrichtigung (NOTIF) in der geladenen ersten Seite (TAB2) anzeigt.

8. Verfahren nach Anspruch 7, wobei der Schritt (E50) des Auslösens einen Schritt des Sendens eines Befehls (COMM) zu wenigstens einer Vorrichtung aufweist, der die Bereitstellung der Benachrichtigung (NOTIF) durch die Vorrichtung bewirkt.

9. Computerprogramm (PG), aufweisend Anweisungen für die Ausführung der Schritte eines Aufrufverfahrens nach einem der Ansprüche 1 bis 8, wenn diese Anweisungen von einem Computer ausgeführt werden.

10. Computerlesbares Speichermedium (SUP), auf dem ein Computerprogramm gespeichert ist, das die Anweisungen für die Ausführung der Schritte eines Aufrufverfahrens nach einem der Ansprüche 1 bis 8 umfasst.

11. Endgerät (T), das den Aufruf wenigstens eines Anwendungsdienstes (S1, S3) über einen Browser (NAV) ermöglicht, wobei das Endgerät Folgendes aufweist:
- ein Erfassungsmodul (DET), das es ermöglicht, in einer ersten Seite (TAB2), die in den Browser (NAV) geladen ist, wenigstens ein Aufrufdatenelement (DN, DN2) zu erfassen, das wenigstens einem Aufrufdatentyp (TY1, TY2) entspricht, der für den wenigstens einen Anwendungsdienst (S1, S3) gespeichert ist; und
- ein Modul zum Aufrufen (INV) des wenigstens einen Dienstes (S1, S3) in der geladenen ersten Seite (TAB2) anhand des wenigstens einen erfassten Aufrufdatenelements (DN, DN2),
wobei das Endgerät **dadurch gekennzeichnet ist, dass** es Empfangsmittel aufweist, die vor dem Erfassen den Empfang einer ersten Anweisung (INS1) ermöglichen, die wenigstens eine zweite Seite (TAB1, TAB3) festlegt, die den wenigstens einen Dienst (S1, S3) bereitstellt, wobei die erste Anweisung (INS1) den wenigstens einen Aufrufdatentyp (TY1, TY2), eine Netzwerkadresse, die auf wenigstens eine dritte Seite (TAB1', TAB3') verweist, und eine Funktion zum Aufruf des wenigstens einen Dienstes (S1, S3) festlegt;wobei das Aufrufen des wenigstens einen Dienstes Folgendes aufweist:
o einen Schritt des Auslösens des Ladens der wenigstens einen dritten Seite (TAB1', TAB3') anhand der wenigstens einen Adresse; und
o einen Schritt des Aufrufens der Funktion;
wobei das Endgerät dazu ausgebildet ist, den wenigstens einen Dienst (S1, S3) in der wenigstens einen dritten Seite (TAB1', TAB3') auszuführen, wobei die Ausführung das Ausführen der Funktion aufweist, das die Anzeige einer Steuereinheit (UNIT) in der geladenen ersten Seite (TAB2) bewirkt, auf die von einem Benutzer zugegriffen werden kann, um den wenigstens einen Dienst (S1, S3) bei seiner Ausführung in der dritten Seite (TAB1', TAB3') zu steuern.

## Claims

1. Method of invocation, in a terminal (T), of at least one application service (S1, S3) by a browser (NAV), said method comprising:
- a step (E40) of detection, in a first page (TAB2) loaded in said browser (NAV), of at least one invocation datum (DN, DN2) according to at least one type (TY1, TY2) of invocation datum stored for said at least one service (S1, S3); and
- a step (E60) of invocation, in said loaded first page (TAB2), of said at least one service (S1, S3) on the basis of said at least one detected invocation datum (DN),
said method being **characterized in that** it comprises, prior to the detection step (E40), a step (E10) of reception of a first instruction (INS1) defining at least one second page (TAB1, TAB3) providing said at least one service (S1, S3), said first instruction (INS1) defining said at least one type (TY1, TY2) of invocation datum, a network address pointing to at least one third page (TAB1', TAB3') and an invocation function of said at least one service (S1, S3);
said invocation step (E60) comprising:
o a step of initiation of the download of said at least one third page (TAB1', TAB3') on the basis of said at least one address; and
o a step of invocation of said function;
said method comprising a step (E80) of execution of said at least one service (S1, S3) in said at least one third page (TAB1', TAB3'), said execution step comprising execution of said function, causing display, in said loaded first page (TAB2), of a control unit (UNIT) that may be accessed by a user with a view to controlling said at least one service (S1, S3) during its execution in said third page (TAB1', TAB3').

2. Method according to Claim 1, comprising, prior to the detection step (E40), a step (E20) of storage of said at least one type (TY1, TY2) of invocation datum.

3. Method according to either one of Claims 1 and 2, wherein said detection step (E40) comprises:
- a step (E400) of identification of at least one invocation datum (DN, DN2) present in said loaded first page (TAB2); and
- a step (E450) of determination, to determine, for at least one said identified invocation datum (DN), whether said datum is according to said at least one type (TY1, TY2) of datum.

4. Method according to any one of Claims 1 to 3, wherein said detection step (E40) comprises at least one among:
- a step of semantic analysis of said loaded first page (TAB2); and
- a step of detection of a coded marker in said first page (TAB2) in association with said at least one invocation datum (DN, DN2).

5. Method according to one of Claims 1 to 4, wherein, in said detection step (E40), said at least one second page (TAB1, TAB3) is not loaded in said browser (NAV).

6. Method according to any one of Claims 1 to 5, comprising a step (E50) of initiation of the provision of at least one notification (NOTIF) indicating the accessibility, in said loaded first page (TAB2), of said at least one service (S1, S3).

7. Method according to Claim 6, wherein, in said initiation step (E50), said browser (NAV) delivers said at least one notification (NOTIF) and displays this notification (NOTIF) in said loaded first page (TAB2).

8. Method according to Claim 7, wherein said initiation step (E50) comprises a step of transmission of a command (COMM) to at least one device, causing said delivery of said notification (NOTIF) by said device.

9. Computer program (PG) comprising instructions for the execution of the steps of an invocation method according to any one of Claims 1 to 8 when these instructions are executed by a computer.

10. Storage medium (SUP) readable by a computer on which is stored a computer program comprising instructions for the execution of said steps of an invocation method according to any one of Claims 1 to 8.

11. Terminal (T) allowing invocation of at least one application service (S1, S3) by a browser (NAV), said terminal comprising:
- a detection module (DET) making it possible to detect, in a first page (TAB2) loaded in said browser (NAV), at least one invocation datum (DN, DN2) according to at least one type (TY1, TY2) of invocation datum stored for said at least one application service (S1, S3); and
- an invocation module (INV) for invoking, in said loaded first page (TAB2), said at least one service (S1, S3) on the basis of said at least one detected invocation datum (DN, DN2),
said terminal being **characterized in that** it comprises reception means allowing, prior to the detection, reception of a first instruction (INS1) defining at least one second page (TAB1, TAB3) providing said at least one service (S1, S3), said first instruction (INS1) defining said at least one type (TY1, TY2) of invocation datum, a network address pointing to at least one third page (TAB1', TAB3') and an invocation function of said at least one service (S1, S3); said invocation of said at least one service comprising:
∘ a step of initiation of the download of said at least one third page (TAB1', TAB3') on the basis of said at least one address; and
o a step of invocation of said function;
said terminal being configured to execute said at least one service (S1, S3) in said at least one third page (TAB1', TAB3'), said execution comprising execution of said function, causing display, in said loaded first page (TAB2), of a control unit (UNIT) that may be accessed by a user with a view to controlling said at least one service (S1, S3) during its execution in said third page (TAB1', TAB3').
